# EUROPÄISCHE PATENTSCHRIFT

(11) **EP 2 219 803 B1**
(45) Veröffentlichungstag und Bekanntmachung des Hinweises auf die Patenterteilung: **24.08.2011**
(21) Anmeldenummer: 08864551.0
(22) Anmeldetag: 18.12.2008
(51) Int. Cl.: B21L 3/00, B23K 20/12

(54) **VERFAHREN ZUR HERSTELLUNG GESCHWEISSTER RUND- UND PROFILKETTEN, KETTENGLIED FÜR EINE RUND- ODER PROFILKETTE SOWIE AUS SOLCHEN KETTENGLIEDERN AUFGEBAUTE RUND- ODER PROFILKETTE**
METHOD FOR PRODUCING WELDED ROUND AND PROFILE CHAINS, CHAIN LINKS FOR A ROUND OR PROFILE CHAIN AND ROUND OR PROFILE CHAIN MADE OF CHAIN LINKS OF SAID KIND
PROCÉDÉ DE FABRICATION DE CHAÎNES SOUDÉES RONDES ET PROFILÉES, MAILLON POUR UNE CHAÎNE RONDE OU PROFILÉE, ET CHAÎNE RONDE OU PROFILÉE CONSTITUÉE DE TELS MAILLONS

(30) Priorität: 20.12.2007 DE 102007061512
(43) Veröffentlichungstag der Anmeldung: 25.08.2010
(73) Patentinhaber: pewag austria GmbH, 8605 Kapfenberg (AT); Technische Universität Graz, 8010 Graz (AT)
(72) Erfinder: CERJAK, Horst-Hannes, A-8010 Graz (AT); PENGG, Ägyd, A-9210 Pörtschach (AT); FUCHS, Franz, A-8605 Kapfenberg (AT)
(74) Vertreter: Geyer, Fehners & Partner
(86) Internationale Anmeldenummer: PCT/EP2008/010842
(87) Internationale Veröffentlichungsnummer: WO 2009/080289

(56) Entgegenhaltungen:
- WO-A-87/02283
- DATABASE WPI Thomson Scientific, London, GB; AN 1986-105647 XP002520573 -& SU 1 181 828 A (PROIZV OB TRAKTORNY) 30. September 1985 (1985-09-30)

## Beschreibung

Die Erfindung bezieht sich auf ein Verfahren zur Herstellung geschweißter Rund- oder Profilketten aus miteinander verbundenen Kettengliedern, die jeweils aus zwei Kettenglied-Teilstücken hergestellt und durch Reibschweißen miteinander verbunden werden. Sie bezieht sich ferner auch noch auf ein Kettenglied für eine Rund- oder Profilkette, das aus zwei Kettenglied-Teilstücken besteht, die durch Reibschweißen miteinander verbunden sind, sowie auf eine aus solchen Kettengliedern aufgebaute Rund- oder Profilkette.

Es ist bekannt, zur Herstellung geschweißter Rund- und Profilstahlketten vorgebogene, an einer Stelle aber noch offene Kettenglieder einzusetzen, die dann durch elektrisches Widerstands- und Abbrennstumpfschweißverfahren zu geschlossenen Kettengliedern und zu einer Kette verschweißt werden.

Diese Kettenglieder werden üblicherweise von Drahtrollen (Coils) oder von Stäben (bei Drahtdurchmessern ab ca. 22 mm) hergestellt, wobei letztere auf Biegemaschinen in einzelne Stummel (Pins) geschnitten, diese zu offenen Kettengliedern gebogen und letztere dann zu einer (noch nicht verschweißten) Kette verbunden werden. In Widerstandsstumpf- oder Abbrennstumpfschweißmaschinen werden diese vorgebogenen Kettenglieder schließlich zu umlaufend geschlossenen Gliedern und damit zur fertigen Kette verschweißt.

Infolge des dabei erforderlichen Biegevorgangs lassen sich nur Runddrähte und Profildrähte mit einfachen Querschnitten zu einer Kette verarbeiten, Kettenglieder mit komplizierten Querschnitten und mit unterschiedlichen Querschnitten sind hingegen mittels des bekannten Biegens nicht herstellbar.

Die angegebenen Schweißverfahren engen auch den Umfang der für die Kettenherstellung einsetzbaren Werkstoffe und Legierungen deutlich ein, so daß z. B. Stähle mit

Kohlenstoffgehalten von mehr als 0,25% mit den genannten Schmelzschweißverfahren wegen der beim Biegen gegebenen Rißgefahr nicht mehr verschweißbar sind. Das bekannte Reibschweißverfahren, mit dem sich auch Stähle mit höheren Kohlenstoffgehalten und viele anderen Eisen- und Nickellegierungen verschweißen lassen, scheidet für die Verschweißung solcher vorgebogener Kettenglieder jedoch aus, da die zu verschweißenden Stoßflächen beim Reibschweißen achsabweichend relativ zueinander oszillierend und parallel bewegt werden müssen, was bei vorgebogenen Kettengliedern wegen der Gefahr eines Ermüdungsbruches nicht machbar ist.

Aus der WO 87/02283 A ist ein Verfahren zum Herstellen geschweißter Kettenglieder der eingangs genannten Art mit einem kreisförmigen Materialquerschnitt bekannt. Dabei wird ein Stahleinsatz mit einem im Querschnitt dem kreisförmigen Materialquerschnitt der Kettenglieder gleichen Querschnitt in einen entsprechenden Ausschnitt zwischen zwei diesen begrenzenden, einander gegenüberstehenden Enden eines vorgeformten anderen Kettenglied-Teilstückes koaxial eingeschoben. Sodann läßt man den Stahleinsatz rotieren, so daß an den jeweils einander zugewandten Enden des Stahleinsatzes und des restlichen Kettenglied-Teilstückes eine zum Reibschweißen erforderliche Temperaturerhöhung erzielt und durch Stauchen des Kettengliedes der zur Verschweißung nötige örtliche Druckaufbau erzeugt werden. Bei dieser Verschweißung durch Rotationsreibschweißen besteht der Stahleinsatz aus einem anderen Material als das restliche Kettengliedteilstück, wobei sein Material festigkeitserhöhende Legierungsbestandteile, etwa Nickel, aufweist. Bei dieser Rotationsschweißung ist es jedoch erforderlich, das Kettenglied-Teilstück in seiner Längsrichtung unter Druck zusammenzudrücken, damit die aneinander reibenden Flächen gegenseitig unter Druck aneinander anliegen. Dabei läßt sich beim Stauchen des Kettengliedes zur Durchführung der Verschweißung eine gewisse Verformung desselben nicht verhindern. Auch tritt bei den Schweißstellen, an denen die Erwärmung aufgebaut wird, infolge der unterschiedlichen Winkelgeschwindigkeiten über den Querschnitt des Gliedschenkels hinweg eine ungleiche Erwärmung auf mit der Folge einer ungleichen Festigkeitsverteilung in den Schweißstellen.

Ausgehend hiervon liegt der Erfindung die Aufgabe zugrunde, ein Herstellungsverfahren zur Herstellung geschweißter Rund- und Profilketten vorzuschlagen, bei dem für die Kettenglieder erheblich mehr Werkstoffe als die bei den bisher bei vorgebogenen Kettengliedern einsetzbaren Werkstoffe verwendet und unterschiedlichste Querschnitt- und Kettenglied-Formen verwirklicht werden können.

Erfindungsgemäß wird dies bei einem Verfahren zur Herstellung geschweißter Rund- und Profilketten der eingangs genannten Art dadurch erreicht, daß die Kettenglied-Teilstücke jedes Kettengliedes längs einer in einer Teilungsebene desselben liegenden Schweißebene mittels Linearreibschweißen miteinander verbunden werden.

Bei der erfindungsgemäßen Verwendung von zwei Kettenglied-Teilstücken zur Herstellung eines umlaufend geschlossenen Kettengliedes mittels des Linearreibschweißverfahrens muß die achsabweichende Relativbewegung der Stoßflächen beim Reibschweißen oszillierend und parallel zueinander nicht mehr, wie bei einem vorgebogenen und nur an einer Stelle offenen Kettenglied, innerhalb des Kettengliedes selbst ausgeglichen werden, wodurch eine Ermüdungsbruchgefahr entsteht, sondern es kann von den jeweils miteinander durch die Linearreibschweißung erst zu verbindenden Kettenglied-Teilstücken, die vor der Verschweißung nicht miteinander verbunden waren, das eine festgehalten und nur das andere relativ zu ihm bewegt oder auch beide relativ zueinander bewegt werden, ohne daß diese Relativbewegungen innerhalb ein- und desselben Teiles spannungsmäßig aufgenommen und ausgeglichen werden müßten.

Die einander zugewandten Endflächen der Kettenglied-Teilstücke liegen jeweils über ihre gesamte Fläche hinweg aneinander an und können beim Bewegen relativ zueinander jeweils auch über ihre gesamte Fläche hinweg aneinander reiben, wobei durch die Relativbewegung beider Kettenglied-Teilstücke zueinander jeweils die Endflächen jedes Kettenglied-Teilstückes über ihren gesamten Flächenbereich hinweg durch die auftretende Reibung auf die gewünschte Temperatur zur Reibschweißung erwärmt werden.

Bevorzugt können dabei alle Endflächen jedes Kettenglied-Teilstückes z. B. parallel zueinander und eben sowie senkrecht zur Längsachse des Kettengliedes ausgerichtet sein, wodurch besonders einfach der zum Linearreibschweißen erforderliche Erhitzungsvorgang in den Endflächen jedes Kettenglied-Teilstückes bei der Relativbewegung der Kettenglied-Teilstücke zueinander erreicht werden kann.

Statt flacher Endflächen könnten jedoch auch geeignet profilierte, zueinander komplementär geformte, Endflächen eingesetzt werden, die sicherstellen, daß zwei aneinander reibende Flächen beim Reibvorgang jeweils über ihren ganzen Flächenbereich hinweg reibschlüssig erwärmt werden.

Die bei den bisher bekannten Verfahren gegebenen Einschränkungen, daß damit zum einen Kettenglieder mit komplizierten und unterschiedlichen Querschnitten nicht herstellbar sind, weil diese sich nicht mittels Biegen herstellen lassen und damit auch nicht in erforderlicher Weise vorgebogen werden können, wie auch zum anderen die sich bei den bisher für die Kettenverschweißung eingesetzten Schweißverfahren ergebende Beschränkung hinsichtlich der einsetzbaren Werkstoffe ist bei dem erfindungsgemäßen Herstellungsverfahren nicht mehr gegeben.

Beim erfindungsgemäßen Herstellungsverfahren können die eingesetzten Kettenglied-Teilstücke zwar auch vorgebogen sein, sind aber gleichermaßen auch mittels anderer Herstellungstechniken herstellbar. So können die Kettenglied-Teilstücke beim erfindungsgemäßen Verfahren z. B. auch geschmiedet, gegossen oder mittels Sintertechnik hergestellt sein, ohne daß sich insoweit beim erfindungsgemäßen Verfahren irgendeine Einschränkung ergeben würde. Gleichermaßen können die unterschiedlichsten Querschnittsformen und Kettengliedformen verwirklicht werden, da die Durchführung des erfindungsgemäßen Herstellungsverfahrens nicht mehr an das Biegeumformverfahren für die Kettenglieder gebunden ist.

Zudem können Kettenglieder aus ganz unterschiedlichen Werkstoffen, wie z. B. aus Metallen, Stählen oder Legierungen, selbst aus Thermoplasten oder Kunststoff/Metall-Verbundwerkstoffen, verwirklicht werden, weil die Beschränkungen, die sich bei Verwendung des Widerstands- oder Abbrennstumpfschweißverfahrens insoweit ergeben, bei dem erfindungsgemäß eingesetzten Linearreibschweißverfahren nicht gelten. Somit ist es erfindungsgemäß möglich, geschweißte Ketten herzustellen, die hinsichtlich Verschleißfestigkeit, insbesondere hinsichtlich geringer Flächenpressung in den Gliedrundungskontaktflächen, und hinsichtlich Zug-, Biege-, Torsions-, Schub- und Scherfestigkeit den bekannten Ketten deutlich überlegen sind. Mittels des Lineareibschweißverfahrens lassen sich auch Stähle mit Kohlenstoffgehalten von mehr als 0,25% und gleichermaßen auch ansonsten nur schwer widerstands- und abbrennstumpfschweißbare Stähle und Nichteisenmetalle, wie Aluminium, Kupfer und Titan, gut zu einer Kette verschweißen. Selbst eine Verschweißung unterschiedlicher Metalle für die einzelnen Kettenglied-Teilstücke eines einzigen Kettengliedes, wie Aluminium mit Stahl, Kupfer mit Stahl usw., ist mit dem erfindungsgemäß eingesetzten Linearreibschweißverfahren möglich. Allerdings eignet sich das erfindungsgemäße Herstellungsverfahren nicht für die Verschweißung von wie bisher stets einstückig vorgebogenen Kettengliedern bekannter Art wegen der bereits erwähnten Ermüdungsbruchgefahr.

Das erfindungsgemäße Herstellverfahren kann auch optimal für die Kettenserienfertigung eingesetzt werden, wobei beim Linearreibschweißen nach der Erhitzungsphase der Schweißstöße ebenfalls, wie bei den anderen bekannten Verfahren, ein abschließender Stauchvorgang ausgeführt wird, welcher die Schweißung definiert beendet. Damit läßt sich das erfindungsgemäße Herstellverfahren auch für schnell aufeinander folgende Schweißungen optimal einsetzen. Mit dem erfindungsgemäßen Herstellungsverfahren lassen sich ohne weiteres auch rostbeständige Stähle oder sogar Pulverstähle usw. verschweißen und für die Kettenherstellung nutzen. Die zu verschweißenden Kettenglied-Teilstücke bedürfen auch keiner speziellen Vorbereitung oder Bearbeitung, da Unebenheiten an den Schweißstoßstellen vor der Verschweißung einfach "weggerieben" werden können.

Bevorzugt werden bei dem erfindungsgemäßen Verfahren als Kettenglied-Teilstücke Halbglieder eingesetzt, so daß jedes Kettenglied aus zwei Halbgliedern erstellt wird, was nicht nur eine kostengünstige, sondern zudem auch eine besonders rasche Herstellung ermöglicht.

Für bestimmte Einsatzfälle kann es auch vorteilhaft sein, für die Herstellung eines Kettengliedes ungleich große Kettenglied-Teilstücke einzusetzen, wodurch anwenderseitig vorgegebenen Anforderungen besonders flexibel und vorteilhaft Rechnung getragen werden kann.

In Verbindung hiermit kann es auch vorteilhaft sein, Kettenglied-Teilstücke mit unterschiedlichen Profilquerschnitten einzusetzen.

Durch das erfindungsgemäße Herstellungsverfahren werden die Gestaltungsmöglichkeiten sowohl hinsichtlich der Formen, wie auch hinsichtlich der eingesetzten Materialien und der Anpassung an besondere Anforderungen gegenüber den bisher bekannten Herstellungsverfahren mit einstückigen, vorgebogenen Kettengliedern erheblich vergrößert.

Eine besonders günstige Ausgestaltung des erfindungsgemäßen Herstellungsverfahrens besteht auch darin, daß Kettenglied-Teilstücke aus Sinterwerkstoff eingesetzt werden, was gerade hinsichtlich der Wirtschaftlichkeit der Fertigung sehr vorteilhaft sein kann.

Für besondere Anwendungsfälle kann es aber auch von Vorteil sein, wenn bei dem erfindungsgemäßen Verfahren Kettenglied-Teilstücke aus Nichteisenmetallen eingesetzt werden, etwa aus Aluminium, Titan, Kupfer, Magnesium und deren Legierungen, wodurch eine sehr große und flexible Anpaßbarkeit an spezielle Anforderungen der Benutzer solcher Ketten geschaffen wird.

Durch den Einsatz des Linearreibschweißens bei dem erfindungsgemäßen Herstellungsverfahren in Verbindung mit der Verwendung von Kettenglied-Teilstücken zur Herstellung jeweils eines Kettengliedes wird die Möglichkeit geschaffen, Ketten aus Eisen- und Nichteisenmetalliegierungen, sogar aus rostfreien Stählen oder Pulverstählen, oder gar aus thermoplastischen Werkstoffen oder aus Kunststoffe/Metall-Verbundwerkstoffen, herstellen zu können. Dies sowie die große Erweiterung der durch das erfindungsgemäße Herstellverfahren gegebenen Gestaltungsmöglichkeiten für die Form der eingesetzten Kettenglieder bringt auf dem Gebiet der Herstellung geschweißter Rund- und Profilketten einen ganz überraschend großen Fortschritt.

Die Erfindung schafft darüber hinaus aber auch ein Kettenglied für eine Rund- oder Profilkette, das einfach und wirtschaftlich herstellbar ist und hinsichtlich seiner Formgebung wie auch des bei ihm einsetzbaren Werkstoffes deutlich größere Gestaltungsmöglichkeiten als bekannte Kettenglieder zuläßt. Dies wird erfindungsgemäß bei einem Kettenglied für eine Rund- oder Profilkette, das aus zwei Kettenglied-Teilstücken besteht, die durch Reibschweißen miteinander verbunden sind, dadurch erreicht, daß die Kettenglied-Teilstücke mittels Linearreibschweißen längs einer in einer Teilungsebene des Kettengliedes liegenden Schweißebene miteinander verbunden sind.

Der erfindungsgemäße Aufbau eines Kettengliedes bringt dieselben Vorteile für dessen Formgebung wie auch für die einsetzbaren Materialien, wie sie weiter oben schon in Verbindung mit dem erfindungsgemäßen Herstellverfahren geschildert wurden, worauf verwiesen sei.

Besonders vorteilhaft ist es, wenn bei einem erfindungsgemäßen Kettenglied die Kettenglied-Teilstücke zwei Halbglieder sind, es also aus zwei Halbgliedern aufgebaut ist, die miteinander durch Linearreibschweißen verbunden sind. Dies ist ein besonders wirtschaftlicher und einfacher Aufbau, der auch einen raschen Schweißvorgang gestattet.

Für bestimmte Einsatzfälle kann es bei einem erfindungsgemäßen Kettenglied aber auch von Vorteil sein, wenn die Kettenglied-Teilstücke unterschiedliche Formen, insbesondere unterschiedliche Profilquerschnitte, aufweisen, wodurch eine flexible und sehr gute Anpaßbarkeit an die Anforderungen spezieller Einsatzfälle erreicht wird.

Bei einem erfindungsgemäßen Kettenglied können für viele Einsatzfälle bevorzugt die Kettenglied-Teilstücke Sinterteile sein, was zu den bei der Verwendung von Sinterteilen grundsätzlich erreichbaren Vorteilen führt.

Das erfindungsgemäße Kettenglied kann aus unterschiedlichsten Metallen, Stählen und deren Legierungen, auch aus Nichteisenmetallen, hergestellt werden, besonders bevorzugt werden für das erfindungsgemäße Kettenglied die Kettenglied-Teilstücke aus einem Einsatz- oder Vergütungsstahl mit einem Kohlenstoffgehalt von mehr als 0,25 % gefertigt, wodurch sich deutliche Verbesserungen in den Festigkeitseigenschaften gegenüber bekannten Ketten erreichen lassen. Mit Vorteil können die Kettenglied-Teilstücke aber auch aus thermoplastischen Kunststoff oder aus Kunststoff/Metall-Verbundwerkstoff bestehen, z.B. Aluminium auf der Innenseite und Kunststoff an der Außenseite des Kettengliedes.

Bevorzugt bestehen die Kettenglied-Teilstücke eines erfindungsgemäßen Kettengliedes aus hochlegiertem rostbeständigem, austenitischem, martensitischem, ferritischem oder ledeburitischem Stahl, wodurch sich eine besonders große Verschleißfestigkeit sowie Zug-, Biege, Torsions-, Schub- und Scherfestigkeit eines solchen erfindungsgemäßen Kettengliedes erreichen läßt.

Die Erfindung wird nachfolgend anhand der Zeichnung im Prinzip beispielshalber noch näher erläutert. Es zeigen:
die Fig. 1 bis Fig. 3 den Stand der Technik, nämlich
- Fig. 1: ein vorgebogenes Kettenglied;
- Fig. 2: mehrere zur Ausbildung einer Kette miteinander verbundene vorgebogene Kettenglieder;
- Fig. 3: die Kettenglieder aus Fig. 2, nunmehr als umlaufende Glieder verschweißt zur Ausbildung einer verschweißten Kette;
- Fig. 4 und 5: jeweils zwei zur Ausbildung eines geschlossenen Kettengliedes durch Linearreibschweißung miteinander zu verbindende Halbgliedhälften;
- Fig. 6: eine andere Form eines erfindungsgemäßen Halbgliedes;
- Fig. 7: eine erfindungsgemäß verschweißte, aus Halbgliedern entsprechend Fig. 6 bestehende Kette;
- Fig. 8: zwei unterschiedliche Ausbildungen der Form von unterschiedlich langen erfindungsgemäßen Halbgliedern;
- Fig. 9: eine erfindungsgemäße Kette, aufgebaut aus den Kettengliedern gemäß Fig. 8, mit unterschiedlichen langen Kettengliedteilungen;
- Fig. 10: eine wieder andere Form eines erfindungsgemäßen Halbgliedes;
- Fig. 11: eine aus Halbgliedern gemäß Fig. 10 bestehende Ausführungsform einer erfindungsgemäßen Kette;
- Fig. 12: eine weitere Ausführungsform eines erfindungsgemäßen Halbgliedes;
- Fig. 13: eine aus Halbgliedern gemäß Fig. 12 hergestellte verschweißte Kette.

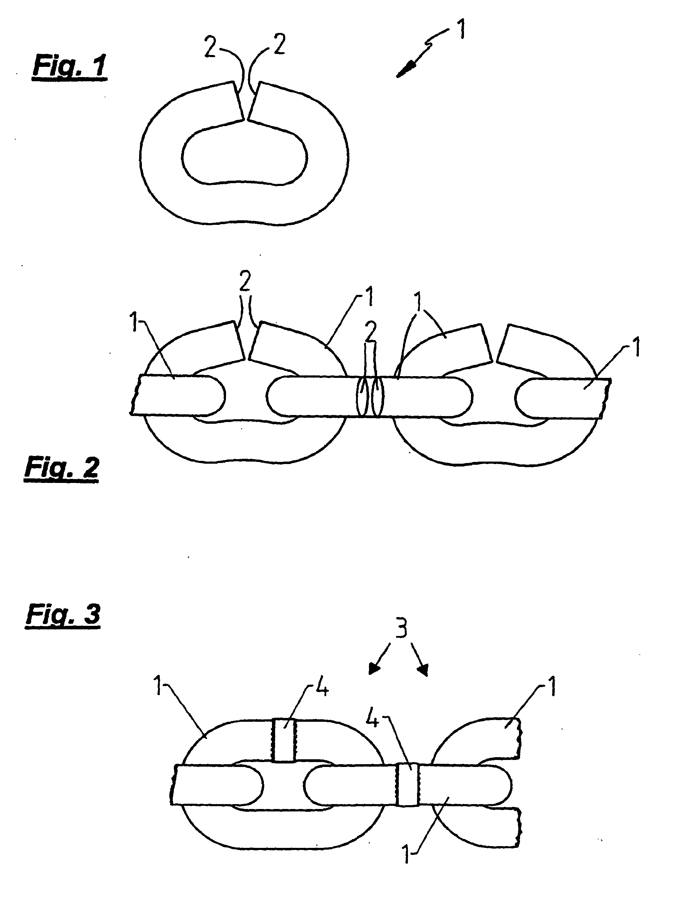

Die in den Figuren 1 bis 3 gezeigten Ketteglieder bzw. aus diesen aufgebauten Kettenstücke illustrieren den Stand der Technik.

Fig. 1 zeigt hierzu ein vorgebogenes Kettenglied 1. Solche Kettenglieder 1 können aus von Drahtrollen (Coils) abgezogenem Draht oder aus Stäben (bei Drahtdurchmessern ab ca. 22 mm), die dann auf Biegemaschinen in einzelne Stummel (Pins) geschnitten und zu Kettengliedern 1 gebogen werden, hergestellt werden. Die Endflächen der vorgebogenen Kettenglieder 1 sind dabei noch relativ weit voneinander entfernt, so daß die einzelnen Kettenglieder 1 gemäß Fig. 1 zur Ausbildung einer Kette ineinander eingehängt werden, wonach dann der Abstand zwischen den zwei Endflächen 2 des vorgebogenen Kettengliedes 1 so verkleinert wird, daß, wie in Fig. 2 gezeigt, die miteinander verbundenen Kettenglieder 1 nicht mehr voneinander gelöst werden können, weil der Durchtrittsquerschnitt zwischen den Endflächen 2 der offenen Enden jedes Kettengliedes 1 zu klein ist, um die volle Materialdicke des gebogenen Schenkels der eingehängten Nachbarglieder hindurchtreten zu lassen. Die Kettenglieder 1 der Darstellung aus Fig. 2 werden sodann durch ein anschließendes Verschweißen der jeweils beiden Endflächen 2a, 2b jedes vorgebogenen Kettengliedes 1 mittels Widerstandsstumpfschweißen oder Abbrennstumpfschweißen miteinander verbunden, wodurch sich dann die fertig hergestellte verschweißte Kette 3 ergibt, wie sie in Fig. 3 dargestellt ist, bei der auch die Schweißstellen 4 ersichtlich sind.

Die Herstellung eines vorgebogenen Kettengliedes 1, wie dies im Prinzip in Fig. 1 dargestellt ist, erfordert einen Biegevorgang, mit dem nur Rund- bzw. Profildrähte mit einfachen Querschnitten zu einer verschweißten Kette 3 verarbeitet werden können. Kettenglieder mit komplizierteren Querschnitten oder unterschiedlichen Querschnitten können mit einem solchen Biegevorgang nicht hergestellt werden. Wegen der genannten Schweißverfahren können auch nur bestimmte Legierungen und Metalle eingesetzt werden, wobei insbesondere Stähle mit Kohlenstoffgehalten von mehr als 0,25% mit den genannten Schmelzschweißverfahren wegen der dann auftretenden Rißgefahr nicht mehr verschweißbar sind.

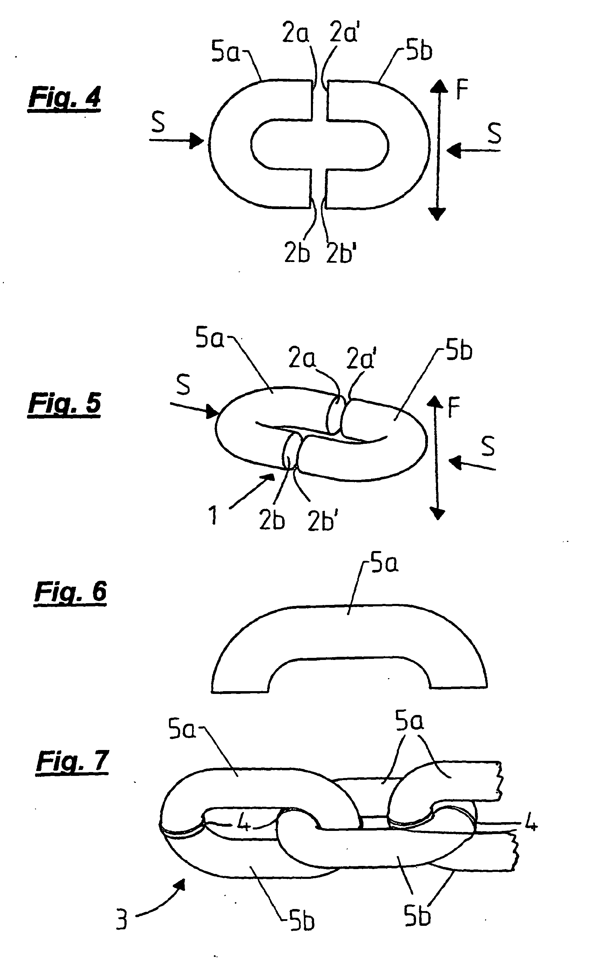

In den Fig. 4 und 5 sind nun zwei jeweils aus zwei Kettenglied-Teilstücken 5a, 5b in Form von Halbgliedern herstellbare erfindungsgemäße Kettenglieder 1 gezeigt, die mittels Linearreibschweißen miteinander verbunden werden können. Hierfür wird eines der beiden Teilstücke, z. B. 5a, in seiner Lage unverändert gehalten, während das andere Teilstück 5b in geeigneter Weise in Richtung der Pfeile F zum Oszillieren gebracht wird. Dabei werden die beiden jeweils ebenen Endflächen 2a, 2b des einen Teilstücks 5a gegen die ebenfalls ebenen Endflächen 2a', 2b' des anderen Teilstücks 5b angepreßt, wobei dann durch die Oszillation des Teilstücks 5b eine Erwärmung der Endflächen 2a, 2b sowie 2a', 2b' beider Teilstücke 5a, 5b über deren gesamte Fläche hinweg hervorgerufen wird. Sobald diese aneinander reibenden ebenen Endflächen 2a, 2b sowie 2a', 2b' infolge der Reibung ausreichend stark erwärmt worden sind, werden sie, in genauer Ausrichtung zueinander, durch eine axial gerichtet Stauchkraft S gegeneinander gepreßt und dadurch jeweils über ihre gesamte Flächenerstreckung hinweg die gewünschte Schweißverbindung an der Schweißstelle 4 hergestellt.

Das Kettenglied 1 aus Fig. 5 besteht aus zwei Halbgliedern 5a, 5b der aus Fig. 4 bereits bekannten Art, wobei hier jedoch nicht das Halbglied 5a festgehalten und das Halbglied 5b in der in Fig. 4 gezeigten Weise in der gemeinsamen Aufspannebene beider Halbglieder oszillierend bewegt wird, sondern nunmehr sogar beide Halbglieder 5a, 5b jeweils senkrecht zu ihren Aufspannebenen und in gegenläufiger Bewegung zueinander hin- und herschwingen, um in dieser Weise an den ebenen Endflächen 2a, 2b sowie 2a', 2b', die dabei wiederum gegeneinander gedrückt werden, die gewünschte Schweißtemperatur jeweils über die gesamte Flächenerstreckung jeder Endfläche 2a, 2b, 2a', 2b' hinweg zu erzeugen. Diese gegenläufigen Linearschwingungen werden in Fig. 5 durch die Pfeile F und F' veranschaulicht.

Die Fig. 6 zeigt nun eine andere Form für ein Kettenglied-Teilstück 5a, wiederum in Form eines Halbgliedes, das der Teilung eines Kettengliedes 1 in einer zu dessen Aufspannebene senkrechten Mittelebene entspricht.

Eine aus solchen Kettenglied-Teilstücken 5a und 5b durch Linearreibschweißung hergestellte Kette 3 ist in Fig. 7 gezeigt.

Wie aus einem Vergleich der Ketten aus den Fig. 3 und 7 unmittelbar entnehmbar ist, liegen die Schweißstellen 4 der einzelnen Kettenglieder 1 bei den Ketten der beiden Ausführungsformen, in Umfangsrichtung jedes Kettengliedes 1 gesehen, um 90° zueinander versetzt.

Neben den Ausführungsformen für Ketten 3, wie sie in den Figuren 3 und 6 dargestellt sind, besteht jedoch grundsätzlich auch die Möglichkeit, daß die miteinander verbundenen Kettenglieder 1 jeder Kette 3 nicht unbedingt alle von gleicher Form sind.

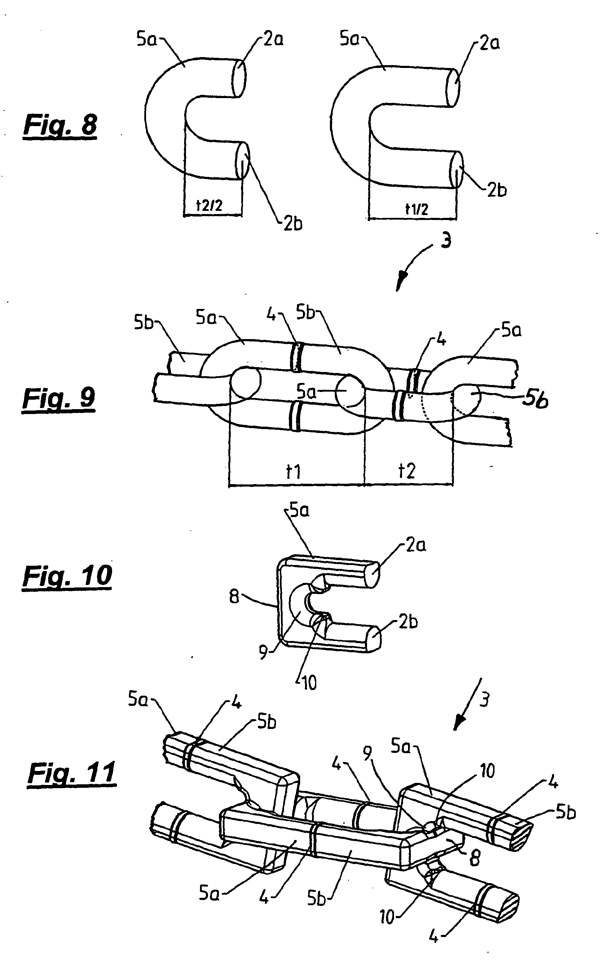

So sind in Fig. 8 zwei Kettenglied-Teilstücke 5a und 5a' (und zwar jeweils in Form eines Halbgliedes) dargestellt, die zur Herstellung von Kettengliedern 1 mit ungleich großer Teilung vorgesehen sind, die abwechselnd im Verlauf der Kette entsprechend Fig. 9 miteinander verbunden werden. Während das in Fig. 8 links dargestellte Kettenglied-Teilstück 5a für die Herstellung eines Kettengliedes 1 mit der Teilung t2 vorgesehen ist, ist das in Fig. 8 rechts dargestellte Kettenglied-Teilstück 5a' zur Herstellung eines Kettengliedes 1' mit einer größeren Teilung t1 bestimmt. Es ergibt eine Kette 3, wie sie in Fig. 9 dargestellt ist, bei der die einzelnen Kettenglieder 1 bzw. 1' abwechselnd ungleich lange Schenkellängen aufweisen. Eine wieder andere Form für ein Kettenglied-Teilstück 5a ist in Fig. 10 dargestellt. Die Außenkontur der Kettenglieder 1, die aus solchen Kettenglied-Teilstücken 5a herstellbar sind, ist rechteckig.

Durch eine an der Innenseite des Buges 8 eines solchen Kettenglied-Teilstückes 5a angebrachte gerundete Ausnehmung 9 sowie an deren Enden vorgesehene Wülste 10 wird erreicht, daß, wie die Kette 3 in Fig. 11 zeigt, bei einem Verdrehen zweier aufeinanderfolgender Kettenglieder 1 durch Zusammenwirken der Wülste 10 mit der Außenkante des abgewinkelten Kettenglied-Teilstücks 5a eine bevorzugte Abwinkelung zwischen den beiden Kettengliedern 1 festgelegt wird.

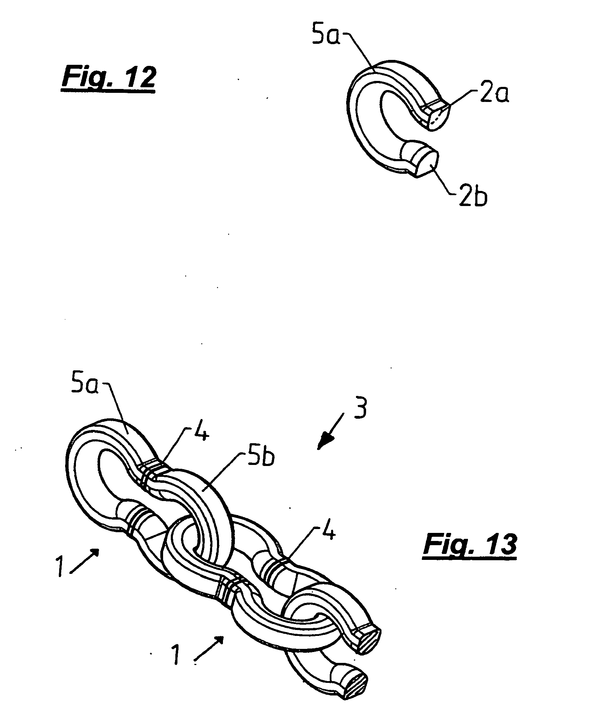

In Fig. 12 ist eine wieder andere Variante eines Kettenglied-Teilstücks 5a dargestellt, die eine im Hinblick auf die spätere Spannungsverteilung in der Kette biegegünstige, gekrümmte Form aufweist, mit der Zugspannungen in den Randfasem des Kettengliedes herabgesetzt werden können. Fig. 13 zeigt eine aus solchen Kettenglied-Teilstücken 5a aufgebaute Kette 3.

Wie aus den Fig. 10 und 12 weiter ersichtlich ist, weisen die dort gezeigten Kettenglied-Teilstücke 5a, 5b beim eingesetzten Materialstrang einen jeweils nicht kreisförmigen Profilquerschnitt an den Endflächen 2a, 2b auf. Aber auch dies ist nur beispielshalber, es könnten selbstverständlich auch hier Profilquerschnitte eingesetzt sein, die irgendeine gerundete, insbesondere eine ovale oder kreisförmige, Querschnittsform zeigen.

Es versteht sich von selbst, daß das Kettenglied 1 noch in einer Vielzahl weiterer Möglichkeiten aus jeweils zwei noch anders ausgebildeten Kettenglied-Teilstücken zusammengesetzt sein kann, welche mittels Linearreibschweißen miteinander verbunden werden können. Dabei können die aneinander reibenden Endflächen 2a, 2b, 2a', 2b' auch anders als eben (in einer zueinander komplementären Form) ausgebildet sein: ihre Formgebung muß jedoch sicherstellen, daß Reibkontakt über die jeweils ganze Endfläche (wenn die beiden miteinander zu verschweißenden Endflächen zueinander ausgerichtet sind) besteht und auch die Relativbewegung der Endflächen zueinander bei fortbestehendem Reibkontakt unbehindert ausgeführt werden kann.

Gleichermaßen ist auch eine große Vielzahl von Profilquerschnitten für solche mittels Linearreibschweißen miteinander verbindbaren Kettenglied-Teilstücken einsetzbar, ohne daß hierbei die sich bei vorzubiegenden Teilstücken (wie beim bekannten Stand der Technik) ergebenden Einschränkungen bei der Wahl des Profilquerschnitts einzuhalten sind.

## Patentansprüche

1. Verfahren zur Herstellung geschweißter Rund- und Profilketten (3) aus miteinander verbundenen Kettengliedern (1), die jeweils aus zwei Kettenglied-Teilstücken (5a, 5b) hergestellt und durch Reibschweißen miteinander verbunden werden, ***dadurch gekennzeichnet, daß*** die Kettenglied-Teilstücke (5a, 5b) jedes Kettengliedes (1) längs einer in einer Teilungsebene desselben liegenden Schweißebene mittels Linearreibschweißen miteinander verbunden werden.

2. Verfahren nach Anspruch 1, **dadurch gekennzeichnet, daß** als Kettenglied-Teilstücke (5a, 5b) Halbglieder eingesetzt werden.

3. Verfahren nach Anspruch 1 oder 2, **dadurch gekennzeichnet, daß** für jedes Kettenglied (1) ungleich große Kettenglied-Teilstücke eingesetzt werden.

4. Verfahren nach einem der Ansprüche 1 bis 3, **dadurch gekennzeichnet, daß** Kettenglied-Teilstücke (5a, 5b) unterschiedlicher Formgebung eingesetzt werden.

5. Verfahren nach Anspruch 4, **dadurch gekennzeichnet, daß** Kettenglied-Teilstücke (5a, 5b) mit unterschiedlichen Profilquerschnitten eingesetzt werden.

6. Verfahren nach einem der Ansprüche 1 bis 5, **dadurch gekennzeichnet, daß** Kettenglied-Teilstücke (5a, 5b) aus Sinterwerkstoff eingesetzt werden.

7. Verfahren nach einem der Ansprüche 1 bis 6, **dadurch gekennzeichnet, daß** Kettenglied-Teilstücke (5a, 5b) aus Nichteisenmetallen eingesetzt werden.

8. Kettenglied für eine Rund- oder Profilkette, das aus zwei Kettenglied-Teilstücken (5a, 5b) besteht, die durch Reibschweißen miteinander verbunden sind, **dadurch gekennzeichnet, daß** die Kettenglied-Teilstücke (5a, 5b) mittels Linearreibschweißung längs einer in einer Teilungsebene des Kettengliedes (1) liegenden Schweißebene miteinander verbunden sind.

9. Kettenglied nach Anspruch 8, **dadurch gekennzeichnet, daß** die Kettenglied-Teilstücke (5a, 5b) Halbglieder sind.

10. Kettenglied nach Anspruch 8 oder 9, **dadurch gekennzeichnet, daß** die Kettenglied-Teilstücke (5a, 5b) unterschiedliche Formen, insbesondere unterschiedliche Profilquerschnitte, aufweisen.

11. Kettenglied nach einem der Ansprüche 8 bis 10, **dadurch gekennzeichnet, daß** die Kettenglied-Teilstücke (5a, 5b) Sinterteile sind.

12. Kettenglied nach einem der Ansprüche 8 bis 11, **dadurch gekennzeichnet, daß** die Kettenglied-Teilstücke (5a, 5b) aus einem Einsatz- oder Vergütungsstahl mit einem Kohlenstoffgehalt von mehr als 0,25 % bestehen.

13. Kettenglied nach einem der Ansprüche 8 bis 12, **dadurch gekennzeichnet, daß** die Kettenglied-Teilstücke (5a, 5b) aus rostbeständigem, austenitischem, martensitischem, ferritischem oder ledeburitischem Stahl bestehen.

14. Kettenglied nach einem der Ansprüche 8 bis 10, **dadurch gekennzeichnet, daß** die Kettenglied-Teilstücke (5a, 5b) aus einem thermoplastischen Kunststoff oder einem Kunststoff/Metall-Verbundwerkstoff bestehen.

15. Aus Kettengliedern (1) nach einem der Ansprüche 8 bis 14 aufgebaute Rund- oder Profilkette (3).

16. Rund- oder Profilkette nach Anspruch 15, **dadurch gekennzeichnet, daß** jeweils zwei miteinander verbundene Kettenglieder (5a, 5b) unterschiedlich lange Teilungen aufweisen.

## Claims

1. Method for the production of welded round and profiled chains (3) from chain links (1) connected together which each are produced from two chain link sections (5a, 5b) and are joined together by friction welding **characterised in that** the chain link sections (5a, 5b) of each chain link (1) are joined together along a welding plane lying in a plane of separation of said sections.

2. Method in accordance with claim 1, **characterised in that** half links are used as the chain link sections (5a, 5b).

3. Method in accordance with claim 1 or 2, **characterised in that** chain link sections of unequal sizes are used for each chain link (1).

4. Method in accordance with one of the claims 1 to 3, **characterised in that** chain link sections (5a, 5b) of differing shapes are used.

5. Method in accordance with claim 4 **characterised in that** chain link sections (5a, 5b) of differing profile cross-sections are used.

6. Method in accordance with one of the claims 1 to 5, **characterised in that** chain link sections (5a, 5b) of sintered material are used.

7. Method in accordance with one of the claims 1 to 6, **characterised in that** chain link sections (5a, 5b) of non-ferrous metals are used.

8. Chain link for a round or profiled chain comprising two chain link sections (5a, 5b) joined together by friction welding **characterised in that** the chain link sections (5a, 5b) are joined together along a welding plane lying in a separation plane of said link (1) by means of linear friction welding.

9. Chain link in accordance with claim 8, **characterised in that** the chain link sections (5a, 5b) are half links.

10. Chain link in accordance with claim 8 or 9, **characterised in that** the chain link sections (5a, 5b) comprise different shapes, more particularly different profile cross-sections.

11. Chain link in accordance with one of the claims 8 to 10, **characterised in that** the chain link sections (5a, 5b) are sintered parts.

12. Chain link in accordance with one of the claims 8 to 11, **characterised in that** the chain link sections (5a, 5b) consist of a case-hardened or tempered steel with a carbon content in excess of 0.25%.

13. Chain link in accordance with one of the claims 8 to 12, **characterised in that** the chain link sections (5a, 5b) consist of a stainless, austenitic, martensitic, ferritic or ledeburitic steel.

14. Chain link in accordance with one of the claims 8 to 10, **characterised in that** the chain link sections (5a, 5b) consist of a thermoplastic or a plastic/metal composite material.

15. Round or profiled chain (3) made up from chain links (1) in accordance with one of the claims 8 to 14.

16. Round or profiled chain in accordance with claim 15 **characterised in that** each of the two chain links (5a, 5b) joined together comprise different length pitches.

## Revendications

1. Procédé de fabrication de chaînes soudées rondes et profilées (3) à partir de maillons (1) reliés les uns aux autres, qui sont fabriqués chaque fois à partir de deux parties de maillon (5a, 5b) et qui sont assemblés les uns aux autres par soudage par friction, **caractérisé en ce que** l'on assemble l'une à l'autre les parties de maillon (5a, 5b) de chaque maillon (1) par soudage par friction linéaire le long d'un plan de soudage situé dans un plan de joint de ce dernier.

2. Procédé selon la revendication 1, **caractérisé en ce que** l'on utilise des demi-maillons comme parties de maillon (5a, 5b).

3. Procédé selon la revendication 1 ou 2, **caractérisé en ce que** l'on utilise des parties de maillon de différente grandeur pour chaque maillon (1).

4. Procédé selon l'une quelconque des revendications 1 à 3, **caractérisé en ce que** l'on utilise des parties de maillon (5a, 5b) de forme différente.

5. Procédé selon la revendication 4, **caractérisé en ce que** l'on utilise des parties de maillon (5a, 5b) présentant des profils de section transversale différents.

6. Procédé selon l'une quelconque des revendications 1 à 5, **caractérisé en ce que** l'on utilise des parties de maillon (5a, 5b) en matériau fritté.

7. Procédé selon l'une quelconque des revendications 1 à 3, **caractérisé en ce que** l'on utilise des parties de maillon (5a, 5b) en métaux non ferreux.

8. Maillon pour une chaîne ronde ou profilée, qui se compose de deux parties de maillon (5a, 5b) qui sont assemblées l'une à l'autre par soudage par friction, **caractérisé en ce que** les parties de maillon (5a, 5b) sont assemblées l'une à l'autre par soudage par friction linéaire le long d'un plan de soudage situé dans le plan de joint du maillon (1).

9. Maillon selon la revendication 8, **caractérisé en ce que** les parties de maillon (5a, 5b) sont des demi-maillons.

10. Maillon selon la revendication 8 ou 9, **caractérisé en ce que** les parties de maillon (5a, 5b) présentent des formes différentes, en particulier des profils de section transversale différents.

11. Maillon selon l'une quelconque des revendications 8 à 10, **caractérisé en ce que** les parties de maillon (5a, 5b) sont des pièces frittées.

12. Maillon selon l'une quelconque des revendications 8 à 11, **caractérisé en ce que** les parties de maillon (5a, 5b) sont constituées d'un acier de cémentation ou d'un acier de traitement présentant une teneur en carbone de plus de 0,25%.

13. Maillon selon l'une quelconque des revendications 8 à 12, **caractérisé en ce que** les parties de maillon (5a, 5b) se composent d'acier inoxydable, austénitique, martensitique, ferritique ou lédéburitique.

14. Maillon selon l'une quelconque des revendications 8 à 10, **caractérisé en ce que** les parties de maillon (5a, 5b) sont constituées d'une matière plastique thermoplastique ou d'un matériau composite matière plastique/métal.

15. Chaîne ronde ou profilée (3) composée de maillons (1) selon l'une quelconque des revendications 8 à 14.

16. Chaîne ronde ou profilée selon la revendication 15, **caractérisée en ce que** chaque fois deux maillons (5a, 5b) assemblés l'un à l'autre présentent des pas de longueur différente.
